# EUROPÄISCHE PATENTSCHRIFT

(11) **EP 2 944 528 B1**
(45) Veröffentlichungstag und Bekanntmachung des Hinweises auf die Patenterteilung: **13.12.2017**
(21) Anmeldenummer: 15163352.6
(22) Anmeldetag: 13.04.2015
(51) Int. Cl.: B60T 13/22, F16D 55/40, F16D 65/18, B60T 13/74, F16D 55/02

(54) **BREMSVORRICHTUNG FÜR FAHRZEUG SOWIE FAHRZEUG**
BRAKING DEVICE FOR VEHICLE AND VEHICLE
DISPOSITIF DE FREINAGE POUR UN VÉHICULE ET VÉHICULE

(30) Priorität: 19.04.2014 DE 102014105602; 26.05.2014 DE 102014107359
(43) Veröffentlichungstag der Anmeldung: 18.11.2015
(73) Patentinhaber: STILL GmbH, 22113 Hamburg (DE)
(72) Erfinder: Ziel, Ronald, 21526 Hohenhorn (DE); Rehder, Jan-Christian, 22144 Hamburg (DE)
(74) Vertreter: Patentship Patentanwaltsgesellschaft mbH

(56) Entgegenhaltungen:
- EP-A2- 1 394 819
- DE-A1-102007 028 688
- DE-A1-102011 004 813
- DE-A1-102012 106 534
- US-A1- 2009 114 461

## Beschreibung

Die Erfindung betrifft ein eine Bremsvorrichtung für ein Fahrzeug, vor allem Flurförderzeug. Insbesondere betrifft die vorliegende Erfindung eine Bremsvorrichtung für ein Fahrzeug, vor allem ein Flurförderzeug, die als Federspeicherbremse mit einem eine Vorspannkraft aufbringenden Kraftspeicher, insbesondere einer Feder, aufgebaut ist, wobei durch die Vorspannkraft eine Druckplatte als ein erster Bremskörper gegen mindestens einen drehbaren und abzubremsenden Bremsrotor gedrückt wird und durch eine Lüftvorrichtung die Druckplatte von dem Bremsrotor in eine gelüftete Stellung gedrückt werden kann. Die Patentanmeldung US-A-2009/0114461 offenbart eine Bremsvorrichtung mit den Merkmalen des Oberbegriffs des Anspruchs 1. Bei Flurförderzeugen, beispielsweise bei Gegengewichtsgabelstaplern, kommt als Feststellbremse sehr häufig eine Federspeicherbremse oder allgemeiner eine Negativbremse zum Einsatz. Eine bekannte Ausführungsform dieser Feststellbremse weist dabei mindestens einen Bremskörper auf, der gegen mindestens einen Bremsrotor durch eine Federkraft bzw. eine Vorspannkraft gedrückt wird. Der Bremsrotor ist dabei mit einem abzubremsenden Rad verbunden. Die Vorspannkraft auf den Bremskörper wird im Regelfall durch eine Feder aufgebracht, kann aber auch durch jede andere geeignete Einrichtung erzeugt werden. Zum Lösen der Bremse kann durch eine Lüftvorrichtung gegen die Vorspannkraft der Bremskörper von dem Bremsrotor weggedrückt werden.
Dabei sind Ausführungsformen mit einer Mehrzahl von Bremsrotoren, als sich drehende Lamellen, die wechselweise angeordnet sind mit feststehenden Lamellen bekannt, letztere als eine Mehrzahl von Bremskörpern, die ein Lamellenpaket bilden und im Regelfall sich in einem Ölbad einer Hydraulikflüssigkeit befinden. Über den ersten Bremskörper auch bezeichnet als Druckplatte wird dann das Lamellenpaket beim Bremsen zusammen gedrückt.
Als Lüftvorrichtung sind Elektromagnete bekannt, durch die der Bremskörper bzw. die Druckplatte am Rand eines Lamellenpaketes gegen die Vorspannkraft angezogen wird. Die Druckplatte wird auch als Ankerplatte bezeichnet und beide Begriffe sollen hier für dieselbe Bedeutung stehen. Bei einem Elektromagneten als Lüftvorrichtung dient dabei häufig die Druckplatte bzw. Ankerplatte im Sinne eines Ankers auch zum Schließen der magnetischen Feldlinien mit einem Kern des Elektromagneten. Im unbestromten Zustand der Elektromagnete wirkt die volle Vorspannkraft auf die Druckplatte und drückt das Lamellenpaket zusammen, so dass die Federspeicherbremse das maximale Bremsmoment erzeugt. Wird der Elektromagnet bestromt, baut sich ein Magnetfeld auf, das die Druckplatte gegen die Vorspannkraft anzieht und dadurch die Federspeicherbremse lüftet.

Alternativ ist auch bekannt, die Druckplatte bzw. den ersten Bremskörper nicht durch einen Elektromagneten, sondern hydraulisch zu lüften, beispielsweise durch einen Hydraulikkolben der über ein Ventil betätigt während des Betriebs des Flurförderzeugs mit Hydraulikfluid unter Druck gesetzt wird und der den Bremskörper gegen die Vorspannkraft von dem Bremsrotor wegbewegt.

Weiterhin sind als Lüftvorrichtung auch pneumatisch betätigte Lüftvorrichtungen möglich.

Nachteilig an diesem Stand der Technik ist, dass bei einem Ausfall des Elektromagneten, beispielsweise bei einem Stromausfall, oder bei einem Druckabfall des Hydraulikkolbens die Druckplatte bzw. der Bremskörper durch die Vorspannkraft unmittelbar und sehr schnell gegen den Bremsrotor und somit die Reibflächen aneinander gedrückt werden. Dadurch liegt unvermittelt das maximale Bremsmoment der Federspeicherbremse an. Die rasch einsetzende Abbremsung kann bei einem Flurförderzeug in voller Fahrt zu einem Abwerfen der Last führen bzw. zu einer Beeinträchtigung der Stabilität, insbesondere auch bei einem Flurförderzeug mit einem Hubmast, der ausgefahren ist.

Weiterhin ist nachteilig an diesem Stand der Technik, dass das Flurförderzeug nach einer Abbremsung durch die Federspeicherbremse durch die Feststellbremse blockiert ist. Wenn die Federspeicherbremse wie beispielsweise wegen einer Fehlfunktion nicht gelöst werden kann und unfreiwillig aktiviert wurde, kann das Flurförderzeug nicht bewegt werden und stellt dann eventuell ein Hindernis dar, indem Wege verstellt werden, oder das Flurförderzeug kann nicht für eine Reparatur abgeschleppt werden.

Schließlich ist bei diesem Stand der Technik auch nachteilig, dass bei einem Elektromagneten zum Lüften der Federspeicherbremse in dem gelüfteten Zustand permanent ein Strom durch die Spule des Elektromagneten fließen muss. Dies verursacht eine elektrische Verlustleistung und vermindert den Wirkungsgrad des gesamten Flurförderzeugs. Ebenso entsteht auch bei einer hydraulisch gelüfteten Federspeicherbremse eine Verlustleistung, da fortwährend der Hydraulikkolben unter Druck gehalten werden und dieser Druck durch eine entsprechend in Betrieb gehaltene Hydraulikpumpe zur Verfügung gestellt werden muss.

Der vorliegenden Erfindung liegt die Aufgabe zugrunde, eine Bremsvorrichtung, insbesondere eine Federspeicherbremse, für ein Fahrzeug, vor allem ein Flurförderzeug, sowie ein entsprechendes Verfahren zur Verfügung zu stellen, mit denen die oben genannten Nachteile vermieden werden und mit denen es nicht zu einem ungewollten, abrupten Einfallen der Bremse kommen kann.

Diese Aufgabe wird durch eine Bremsvorrichtung für ein Fahrzeug, insbesondere Flurförderzeug, mit den Merkmalen des unabhängigen Patentanspruchs 1 und ein Verfahren mit den Merkmalen des Anspruchs 19 gelöst. Vorteilhafte Weiterbildungen der Erfindung sind in den Unteransprüchen angegeben.

Die Aufgabe wird erfindungsgemäß dadurch gelöst, dass bei einer Bremsvorrichtung für ein Fahrzeug, insbesondere Flurförderzeug, die als Federspeicherbremse mit einem eine Vorspannkraft aufbringenden Kraftspeicher, insbesondere einer Feder, aufgebaut ist, wobei durch die Vorspannkraft eine Druckplatte als ein erster Bremskörper gegen mindestens einen drehbaren und abzubremsenden Bremsrotor gedrückt wird und durch eine Lüftvorrichtung die Druckplatte von dem Bremsrotor in eine gelüftete Stellung gedrückt werden kann, die Druckplatte in der gelüfteten Stellung durch eine Verriegelungsvorrichtung unabhängig von der Lüftvorrichtung gehalten werden kann.

Vorteilhaft kann es dadurch nicht unbeabsichtigt zu einem Einfallen der Feststellbremse während des Betriebs des Fahrzeugs und vor allem vorteilhaft bei einem Flurförderzeug kommen, etwa wenn bei einer durch einen Elektromagneten gelüfteten Federspeicherbremse der Strom ausfällt. Ebenso wenig kann im Falle einer durch einen Hydraulikkolben gelüfteten Federspeicherbremse es zu einem abrupten Einfallen der Feststellbremse bei einem Druckabfall kommen. Stabilitätsprobleme des Flurförderzeugs und auch ein Abwerfen der Last werden dadurch verhindert. Da die Feststellbremse nicht zwangsläufig automatisch einfällt, wenn das Flurförderzeug durch einen Defekt ausfällt, bleibt ein Abschleppen und Bewegen eines ausgefallenen Flurförderzeugs noch möglich. Da es möglich ist, nach dem Schließen der Verriegelungsvorrichtung die Lüftvorrichtung abzuschalten, beispielsweise den Druck eines Hydraulikkolbens oder den Spulenstrom eines Elektromagneten, können die Gesamtenergiebilanz und der Wirkungsgrad des Flurförderzeugs verbessert werden, da weniger oder keine Verlustleistung mehr entsteht. Die Verriegelungsvorrichtung zeichnet sich vor allem dadurch aus, dass sie völlig unabhängig von der Lüftvorrichtung die Druckplatte in der gelüfteten Position halten kann. Die übliche Ausführungsform der Federspeicherbremse benutzt eine Stahlfeder als Kraftspeicher. Es ist jedoch auch möglich, andere Kraftspeicher vorzusehen. Grundsätzlich ist es denkbar, die hier und nachfolgend beschriebene Federspeicherbremse bei jeglichem Fahrzeug mit einer Federspeicherbremse einzusetzen über Flurförderzeuge hinaus, wie beispielsweise bei Baumaschinen, ganz allgemein Arbeitsmaschinen und Kraftfahrzeugen aller Art.

Vorteilhaft hält die Verriegelungsvorrichtung mechanisch formschlüssig die Druckplatte.

In einer günstigen Ausgestaltung weist die Verriegelungsvorrichtung mindestens ein radial nach innen an einen Absatz und/oder in eine Ausnehmung der Druckplatte greifendes Riegelelement auf.

Das Riegelelement kann dabei beispielsweise ein Stift sein, der in eine Bohrung als Ausnehmung der Druckplatte eingreift. Ebenso kann das Riegelelement hinter eine Abstufung sich radial bewegend eingreifen, wenn die Druckplatte sich in der gelüfteten Position befindet.

Die Verriegelungsvorrichtung kann über den Umfang der Druckplatte verteilt mehrere Riegelelemente aufweisen, bevorzugt drei Riegelelemente.

Durch die Verteilung mehrerer Riegelelemente über den Umfang kann ein Verkannten der Druckplatte vermieden werden. Dabei sind drei Riegelelemente eine minimale Anzahl, mit der eine relativ gleichmäßige Verteilung der Kräfte ohne ein Kippmoment auf die Druckplatte erreicht werden kann.

In einer vorteilhaften Weiterbildung der Bremsvorrichtungen besteht die Verriegelungsvorrichtung aus einem drehbaren Ring, der zusammen mit dem Bremskörper eine Bajonettverriegelung bildet, indem radial angeordnete Stifte mit radial angeordneten Stufen zusammenwirken.

Ein Ring ist außerhalb um die Druckplatte angeordnet, der in einem kleinen Winkelbereich verdreht werden kann. Die Bajonettverriegelung ist dabei beispielsweise so aufgebaut, dass radial orientierte Stifte in Nuten über den Bewegungsbereich der Druckplatte geführt sind und in der gelüfteten Position der Druckplatte durch verdrehen die Stifte auf einer Stufe so gehalten werden, dass die Druckplatte durch den Kraftspeicher nicht verschoben werden kann. Die Anordnung von Nuten mit Stufe und Stiften ist dabei austauschbar. Bevorzugt weist der Ring die Stifte auf. Durch diese Verriegelungsvorrichtung wird ein Halten ohne Verkannten über eine Vielzahl von Haltepunkten ermöglicht.

Die Verriegelungsvorrichtung kann an axialen Verlängerungselementen der Druckplatte auf einer zu dem Bremsrotor abgewandten Seite des Kraftspeichers und der Lüftvorrichtung wirken.

Beispielsweise kann durch axial orientierte Zugbolzen oder einen Hohlzylinder die Verriegelungsvorrichtung dadurch in Bezug auf den Bremsrotor und die wirksame Fläche der Druckplatte auf die andere Seite von Lüftvorrichtung und Kraftspeicher verlegt werden. Die Verriegelungskräfte der Verriegelungsvorrichtung greifen dann nahe einer Achse der Druckplatte an und es ergeben sich mehr Gestaltungsspielräume in Bezug auf den Bauraum.

Vorteilhaft ist die Verriegelungsvorrichtung durch eine Feder in Öffnungsrichtung oder Schließrichtung vorgespannt.

In einer günstigen Ausführung kann die Verriegelungsvorrichtung durch einen Elektromagneten betätigt werden.

Beispielsweise kann durch eine Feder die Verriegelungsvorrichtung in einer Schließrichtung vorgespannt sein, beispielsweise indem bei einem Stift als Riegelelement eine Druckfeder vorgesehen ist, die den Stift in eine Bohrung der Druckplatte drückt, sobald die gelüfteten Position der Druckplatte erreicht ist. Dadurch kann ein automatisches Schließen der Verriegelungsvorrichtung beim Erreichen der gelüfteten Position bewirkt werden. In diesem Fall wird bei geschlossener Verriegelungsvorrichtung keine Energie verbraucht und dadurch der Wirkungsgrad zusätzlich optimiert. Umgekehrt ist alternativ auch eine Ausführung möglich, bei der die Verriegelungsvorrichtung in einer Öffnungsrichtung vorgespannt ist, etwa bei der Ausführungsform durch einen Stift als Riegelelement mittels einer Zugfeder. Bei dieser letzteren Ausführungsform muss dann durch ein Betätigungselement, etwa einen Elektromagneten, das Riegelelement in die geschlossene Position verbracht werden. Bei geschlossener Verriegelungsvorrichtung werden das Riegelelement, beispielsweise der Stift, aber auch die Stifte einer Bajonettverriegelung, durch die Flächenpressungskräfte der Vorspannkraft der Federspeicherbremse so belastet, dass sie in ihrer Position gehalten werden. Es ist dann auch in der Ausführungsform mit Zugfeder möglich, den Strom eines Elektromagneten, der die Verriegelungsvorrichtung betätigt, ebenfalls abzuschalten.

Die Verriegelungsvorrichtung kann durch eine von Hand betätigbare, mechanische Kraftübertragung geschlossen und/oder geöffnet werden.

In einer vorteilhaften Ausgestaltung kann die Kraftübertragung ein Bowdenzug sein.

Durch eine solche mechanische Kraftübertragung, die von Hand betätigt werden kann, beispielsweise ein Gestänge oder ein Bowdenzug, kann eine stromlose Betätigung der Verriegelungsvorrichtung beispielsweise von einem Fahrerarbeitsplatz aus erfolgen, Ebenso kann aber auch eine Notbetätigung durch einen Handhebel oder ähnliches nahe an der Federspeicherbremse selbst vorgesehen sein. Durch eine Betätigungsmöglichkeit am Fahrerarbeitsplatz muss ein Fahrer das Fahrzeug bzw. Flurförderzeug nicht verlassen und es ergibt sich ein Sicherheitsgewinn. Auch ergibt sich die Möglichkeit, den Zustand der Verriegelungsvorrichtung und dadurch auch den Betriebszustand der Feststellbremse von dem Fahrerarbeitsplatz aus zu erkennen.

Vorteilhaft weist die Lüftvorrichtung mindestens einen Hydraulikkolben auf.

Die Lüftvorrichtung kann mindestens einen Elektromagneten aufweisen.

In einer Ausgestaltung der Bremsvorrichtung ist die Verriegelungsvorrichtung aus mindestens einem Permanentmagnet gebildet, dessen Feldstärke die Druckplatte in der gelüfteten Position halten kann.

Vorteilhaft kann durch eine mechanische Lösevorrichtung die Druckplatte von dem Permanentmagneten weggedrückt werden.

Dadurch kann die Feststellbremse zum Einfallen gebracht werden, wenn beispielsweise nach einem Stromausfall ein Elektromagnet als Lüftvorrichtung nicht dazu verwendet werden kann, das Magnetfeld des Permanentmagneten zumindest teilweise aufzuheben.

Durch ein Gegenfeld des Elektromagneten kann die Druckplatte von dem Permanentmagneten gelöst werden.

Dadurch wird der Permanentmagnet soweit abgeschwächt in seiner Feldstärke, dass durch die Vorspannkraft des Kraftspeichers sich die Druckplatte löst. Sobald ein Luftspalt entsteht oder sich vergrößert, reicht die magnetische Feldstärke nicht mehr aus, um die Druckplatte zu halten die Feststellbremse fällt ein.

In einer günstigen Ausgestaltung der Bremsvorrichtung kann durch eine zusätzliche Betriebsbremse eine zur Vorspannkraft entgegengesetzte Bremskraft aufgebracht werden.

Die Betriebsbremse wirkt dabei so, dass sie gegen die Vorspannkraft auf die Druckplatte drückt und dadurch in einer Alternative eine Regulierung der Vorspannkraft zur Regelung der Bremskraft im Betrieb ermöglicht. Alternativ kann die Betriebsbremse auf den Bremsrotor von der anderen Seite her eine Bremskraft ausüben und den Bremsrotor gegen die Druckplatte in der gelüfteten Position drücken bzw. das Lamellenpaket im Falle eines Lamellenpaket zusammendrücken. Dies ermöglicht ein Lösen der Feststellbremse, ohne die Lüftvorrichtung benutzen zu müssen. Dadurch wird auch bei einem ausgefallenen Fahrzeug bzw. Flurförderzeug, bei dem beispielsweise kein Strom zur Verfügung steht, um einen Elektromagneten als Lüftvorrichtung zu betätigen, ein Lösen der Feststellbremse möglich. Hierzu ist es einzig erforderlich, dass die Betriebsbremse eine größere Bremskraft aufbringen kann über die Bremsbetätigungsvorrichtung als die Vorspannkraft der Federspeicherbremse. Durch die Betriebsbremse kann die Druckplatte dann bis in die gelüftete Position gedrückt und durch die Verriegelungsvorrichtung in dieser gehalten werden. Wenn zusätzlich die per Hand betätigbare mechanische Kraftübertragung zur Verfügung steht, kann dadurch die Feststellbremse auch bei einem stromlosen bzw. ausgefallenen Fahrzeug gelöst werden und ein Abschleppen wird ermöglicht. Es ist sogar denkbar, eine Feststellbremse auszuführen, die ohne eine Lüftvorrichtung auskommt und bei der ein Lüften allein durch die Betriebsbremse zusammen mit der Verriegelungsvorrichtung erfolgt. Diese kann alle zuvor geschilderten Merkmale aufweisen, jeweils ohne Lüftvorrichtung.

In einer günstigen Weiterbildung der Bremsvorrichtung kann die Betriebsbremse durch Seilzug oder hydraulisch betätigt werden.

Insbesondere durch eine hydraulisch betätigte Fußbremse können große Bremskräfte aufgebracht werden, durch die die Vorspannkraft des Kraftspeichers überwunden werden kann.

Es können eine Mehrzahl von Bremskörpern wechselweise mit Bremsrotoren ein Lamellenpaket bilden, wobei der erste Bremskörper als Druckplatte das Lamellenpaket zusammen drücken kann.

Die Aufgabe wird auch gelöst durch ein Verfahren zur Steuerung einer Bremsvorrichtung wie Sie zuvor beschrieben wurde, bei dem zum Lösen der Feststellbremse die Lüftvorrichtung betätigt, die Verriegelungsvorrichtung geschlossen und während des Betriebs des Fahrzeuges, vor allem eines Flurförderzeugs, die Lüftvorrichtung abgeschaltet wird sowie zum Anziehen der Feststellbremse zunächst die Lüftvorrichtung angeschaltet wird, die Verriegelungsvorrichtung geöffnet und dann die Lüftvorrichtung gelöst wird.

Dadurch ergibt sich vorteilhaft eine Energieeinsparung, da die Lüftvorrichtung während des Betriebs des Fahrzeuges keinen Strom verbraucht. Ein Elektromagnet als Lüftvorrichtung kann abgeschaltet werden, wie auch eine Hydraulikpumpe nicht die Leistung für die Druckversorgung eines Hydraulikkolbens als Lüftvorrichtung zur Verfügung stellen muss. Bei einem Ausfall der Stromversorgung kommt es nicht zu einem abrupten und plötzlichen Einfallen der Feststellbremse, da diese durch die Verriegelungsvorrichtung noch gehalten wird, die auch im stromlosen Zustand im Regelfall durch die Flächenpressung nicht öffnet.

Weitere Vorteile und Einzelheiten der Erfindung werden anhand der in den schematischen Figuren dargestellten Ausführungsbeispiele näher erläutert. Hierbei zeigt
- Fig. 1: eine Schnittdarstellung einer Feststellbremse mit Betriebsbremse nach dem Stand der Technik,
- Fig. 2: schematisch eine erfindungsgemäße Bremsvorrichtung,
- Fig. 3: schematisch in einem Detailausschnitt eine weitere Ausführungsform einer erfindungsgemäßen Bremsvorrichtung
- Fig. 4: eine Druckplatte mit Verriegelungsvorrichtung einer weiteren Ausführungsform in Aufsicht,
- Fig. 5: die Darstellung der Fig. 4 mit geschlossener Verriegelungsvorrichtung,
- Fig. 6: die Druckplatte mit Verriegelungsvorrichtung in einer Seitenansicht,
- Fig. 7: eine Detailansicht der Fig. 4 und
- Fig. 8: in einer Perspektivansicht die Druckplatte und Verriegelungsvorrichtung der Fig. 4 mit einem Lamellenpaket.

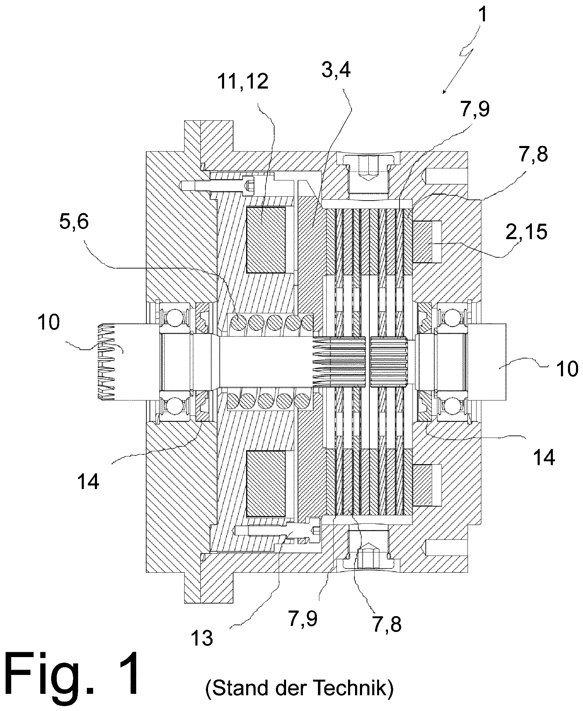

Die Fig. 1 zeigt eine Schnittdarstellung einer Feststellbremse 1 mit einer Betriebsbremse 2 nach dem Stand der Technik. Eine Druckplatte 3 ist ein erster Bremskörper 4 und wird durch eine Feder 5 als Kraftspeicher 6 in der Darstellung der Fig. 1 nach rechts vorgespannt auf ein Lamellenpaket 7, das aus einer Mehrzahl von Bremskörpern 8 und Bremsrotoren 9 aufgebaut ist. Dabei sind die Bremsrotoren 9 auf zwei Wellen 10 aufgeteilt, die drehend mit einem rechten und einem linken Rad verbunden sind. Dadurch kann die Feststellbremse 1 zwei Räder einer Achse zugleich abbremsen. Durch eine Lüftvorrichtung 11 in Form eines Elektromagneten 12 kann die Druckplatte 3 gegen die Kraft der Feder 5 nach links in eine gelüftete Position gezogen werden. Führungsschrauben 13 dienen zur Drehsicherung und Führung der Druckplatte 3 und durch Radialdichtringe 14 erfolgt eine Abdichtung für das Hydraulikfluid, in dem das Lamellenpaket 7 läuft.

Wenn der Elektromagnet 12 stromlos ist, drückt die Feder 5 die Druckplatte 3 nach rechts und komprimiert das Lamellenpaket, wodurch die Bremsrotoren 9 und über diese die zwei Wellen 10 in einer Funktion als Feststellbremse 1 abgebremst werden. Die Betriebsbremse 2 besteht aus einem Hydraulikkolben 15, der ringförmig ausgeführt ist, und bei Betätigung auf das Lamellenpaket 7 eine Kraft in Richtung auf die Druckplatte 3 gegen die Richtung der Vorspannkraft der Feder 5 ausübt. Wenn die Druckplatte 3 sich in der gelüfteten Position befindet, kann dadurch eine Betriebsbremsung erfolgen. Wenn die Druckplatte 3 sich in einer Bremsposition befindet, so kann durch den Hydraulikkolben 15 bei entsprechender Auslegung die Druckplatte 3 nach links bis in deren gelüftete Position verschoben werden.

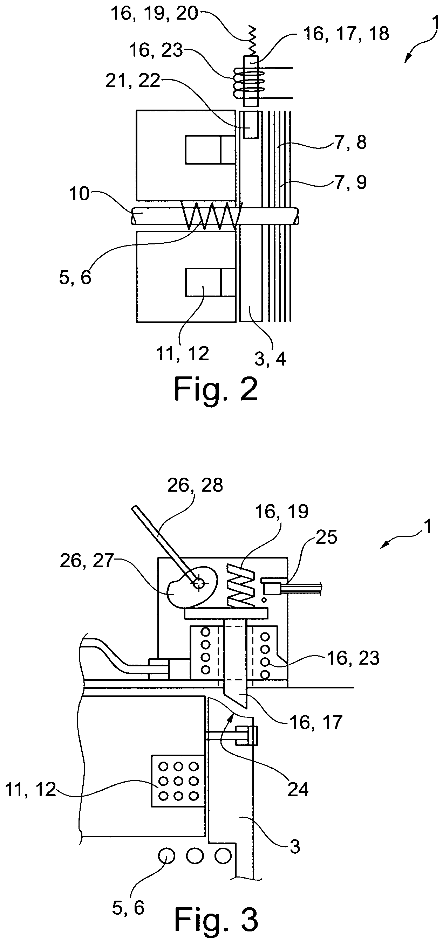

Die Fig. 2 zeigt schematisch eine erfindungsgemäße Bremsvorrichtung. Den Komponenten der Fig. 1 entsprechende Bauteile sind mit denselben Bezugszeichen versehen. Die Feder 5 als Kraftspeicher 6 wirkt auf die Druckplatte 3 als erster Bremskörper 4 und drückt diese in der Darstellung nach rechts auf wechselweise angeordnete Bremskörper 8 und Bremsrotoren 9, die ein Lamellenpaket 7 bilden, durch das eine Welle 10 abgebremst werden kann. Die Druckplatte 3 wird durch den Elektromagneten 12 als Lüftvorrichtung 11 nach links gegen die Vorspannkraft der Feder 5 gezogen.

Eine Verriegelungsvorrichtung 16 besteht aus einem Riegelelement 17 in Form eines Stiftes 18, das durch eine Zugfeder 19 oder alternativ durch eine Druckfeder 20 in eine Schließ- oder Öffnungsrichtung vorgespannt ist. Das Riegelelement 17 wirkt mit einer Ausnehmung 21 in Form einer Bohrung 22 in der Druckplatte 3 zusammen. Durch einen Elektromagneten 23 kann bei einer Druckfeder 20 das Riegelelement aus der Ausnehmung 21 herausgezogen werden. Bei einer Zugfeder 19 ist der Elektromagnet 23 so gestaltet, dass bei fließendem Strom das Riegelelement 17 bzw. der Stift 18 in die Ausnehmung 21 der Druckplatte 3 gezogen wird, wenn sich diese in der gelüfteten Position befindet.

In der Variante mit einer Druckfeder 20 wird der Stift 18 automatisch in die Bohrung 22 der Druckplatte 3 gedrückt, sobald die Druckplatte 3 in die gelüftete Position kommt. Sobald die Verriegelungsvorrichtung 16 geschlossen ist, kann der Spulenstrom des Elektromagneten 12 als Lüftvorrichtung 11 abgeschaltet werden und es wird dadurch Energie eingespart. Da auf den Stift 18 ein Flächenpressungsdruck aufgrund der Kraft der Feder 5 wirkt, muss zum Lösen der Verriegelungsvorrichtung 16 der Spulenstrom des Elektromagneten 12 wieder eingeschaltet werden und durch den Elektromagneten 23 anschließend der Stift 18 aus der Bohrung 22 gegen die Kraft der Druckfeder 20 gezogen werden. Wenn nun der Strom in dem Elektromagneten 12 abgeschaltet wird, fällt die Federspeicherbremse ein.

Vorteilhaft fällt jedoch die Feststellbremse 1 nicht unvermittelt ein, wenn beispielsweise der Strom des Fahrzeuges ausfällt, da durch den Stift 18 weiterhin die Druckplatte 3 in der gelüfteten Position gehalten wird.

In einer Variante mit einer Zugfeder 19 muss der Stift 18 durch den Elektromagneten 23 in die Bohrung 22 der Druckplatte 3 gedrückt werden, sobald die Druckplatte 3 in die gelüftete Position kommt. Wenn nachfolgend der Spulenstrom des Elektromagneten 12 der Lüftvorrichtung 11 abgeschaltet wird, wirkt auf den Stift 18 auch hier ein Flächenpressungsdruck aufgrund der Kraft der Feder 5, so dass der Elektromagnet 23 nicht mehr weiter bestromt werden muss. Auch in diesem Fall kann daher der Energieverlust durch einen permanenten Strom vermieden werden. Sobald der Spulenstrom des Elektromagneten 12 in der Lüftvorrichtung 11 wieder eingeschaltet wird, entfällt der Flächenpressungsdruck, so dass durch die Zugfeder 19 der Stift 18 aus der Bohrung 22 gezogen wird. Wird nachfolgend der Strom in der Lüftvorrichtung 11 abgeschaltet, so fällt die Feststellbremse 1 ein.

Auch bei dieser Variante kommt es daher bei einem Stromausfall des Fahrzeugs nicht zu einem unbeabsichtigten Einfallen der Feststellbremse 1. Um einen ausreichenden Flächenpressungsdruck zu erreichen, muss der Reibungswiderstand größer sein als die Zugkraft der Zugfeder 19, wobei gegebenenfalls noch Reserven zu berücksichtigen sind für den Fall von Erschütterungen des Flurförderzeugs. Wenn eine hier nicht dargestellte, wie in der Fig. 1 beschriebene, von der anderen Seite wirkende Betriebsbremse 2 vorhanden ist, kann in einem solchen Fall nach einem Ausfall des Flurförderzeugs die Verriegelungsvorrichtung 16 gezielt durch betätigen der Betriebsbremse 2 gelöst werden, da dann der Flächenpressungsdruck aufgehoben wird und die Zugfeder 19 den Stift 18 aus der Bohrung 22 zieht.

Vorteilhaft sind mehrere Riegelelemente 17 bzw. Stifte 18 über den Umfang der Druckplatte 3 verteilt, um einen Verkippen und eine ungleichmäßige Belastung zu vermeiden. Bevorzugt werden drei Stifte 18 über den Umfang angeordnet.

Die Fig. 3 zeigt schematisch in einem Detailausschnitt eine weitere Ausführungsform einer erfindungsgemäßen Bremsvorrichtung. Dargestellt ist eine Verriegelungsvorrichtung 16 mit einem Teil der Druckplatte 3, dem Elektromagneten 12 als Lüftvorrichtung 11 sowie der Feder 5 als Kraftspeicher 6. Die Verriegelungsvorrichtung 16 weist ein Riegelelement 17 auf, das in der dargestellten, geschlossenen Stellung hinter eine Abstufung 24 der Druckplatte 3 greift. Das Riegelelement 17 wird durch die Zugfeder 19 in die geöffnete Stellung vorgespannt und kann durch den Elektromagneten 23 in die geschlossene Stellung gezogen werden. Ein Kontaktschalter 25 erfasst, ob die Verriegelungsvorrichtung 16 geschlossen ist oder nicht. Zusätzlich ist als zur Betätigung eine mechanische Kraftübertragung 26 vorgesehen, die eine Nockenscheibe 27 sowie einen Handhebel 28 aufweist.

Bei der dargestellten Ausführungsform wird wie bei der zuvor beschriebenen Variante die Verriegelungsvorrichtung 16 durch den Elektromagneten 23 geschlossen. Jedoch ergibt sich hier die zusätzliche Option, auch nach einem Stromausfall über die hier ebenfalls nicht dargestellte Betriebsbremse 2 die Feststellbremse 1 aus der geschlossenen Stellung zu lösen. Hierzu muss über die Betriebsbremse 2 die Druckplatte 3 in die gelüftete Position gedrückt werden und anschließend über den Handhebel 28 als Notbetätigung das Verriegelungselement 17 durch die Nockenscheibe 27 in die geschlossene Stellung der Verriegelungsvorrichtung 16 verbracht werden. Dadurch kann ein ausgefallenes Flurförderzeug abgeschleppt werden oder noch bewegt werden.

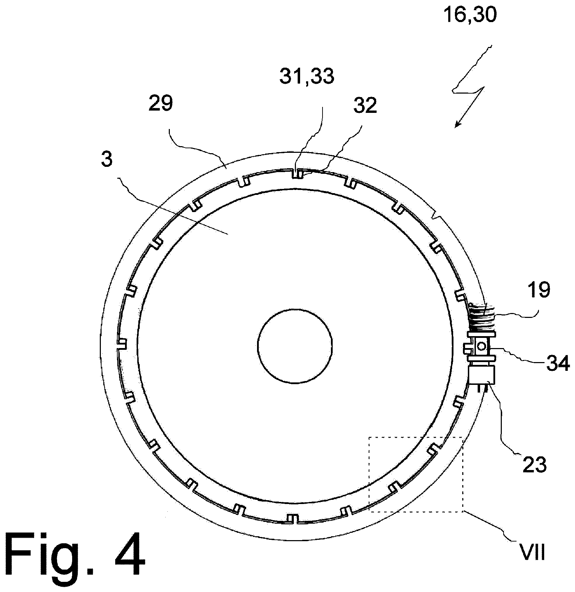

Die Fig. 4 zeigt eine Druckplatte 3 mit Verriegelungsvorrichtung 16 einer weiteren Ausführungsform in Aufsicht. Die Verriegelungsvorrichtung 16 besteht aus einem drehbaren Ring 29, der zusammen mit der Druckplatte 3 eine Bajonettverriegelung 30 bildet, indem radial angeordnete Stifte 31 des Rings 29 mit radial angeordneten Stufen 32 und Nuten 33 der Druckplatte 3 zusammenwirken. An einem Mitnehmer 34 ist eine Zugfeder 19 angeordnet, gegen deren Kraft durch den Elektromagneten 23 der Ring 29 verdreht werden kann. In der Darstellung der Fig. 4 befinden sich die Stifte 31 in den Nuten 33 der Druckplatte. 16.

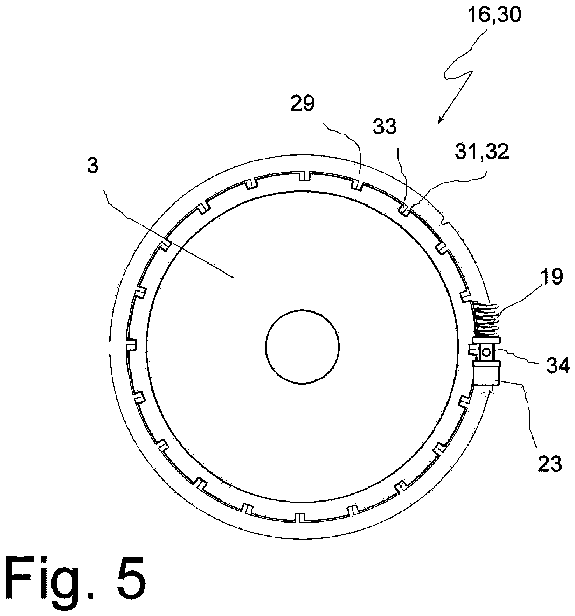

Die Fig. 5 zeigt die Darstellung der Fig. 4 mit geschlossener Verriegelungsvorrichtung 16. Der Ring 29 ist gegenüber der Druckplatte 3 um einen kleinen Winkel verdreht, indem der Mitnehmer 34 von dem Elektromagneten 23 gegen die Kraft der Zugfeder 19 angezogen wurde. Dadurch kommen die Stifte 31 nicht mehr in den Nuten 33, sondern über den Stufen 32 zu liegen und die Verriegelungsvorrichtung 16 ist geschlossen.

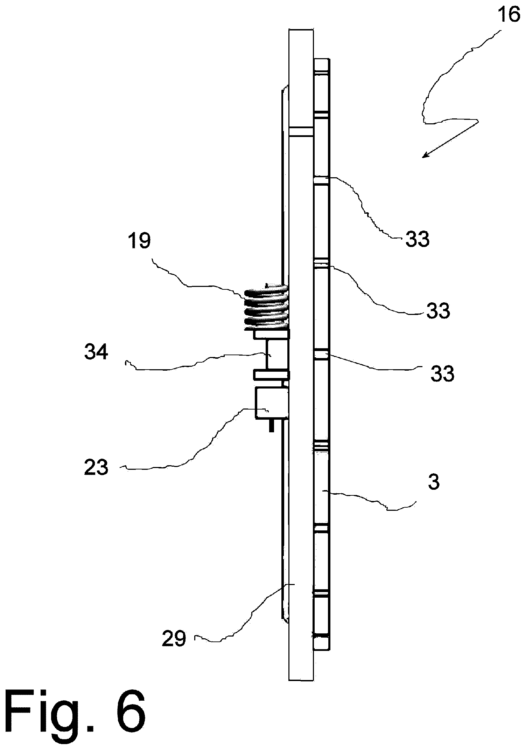

Die Fig. 6 zeigt die Druckplatte 3 mit der Verriegelungsvorrichtung 16 in einer Seitenansicht. Durch den Mitnehmer 34 kann der Elektromagnet 23 gegen die Kraft der Zugfeder 19 den Ring 29 verdrehen. In der Druckplatte 3 befinden sich die Nuten 33.

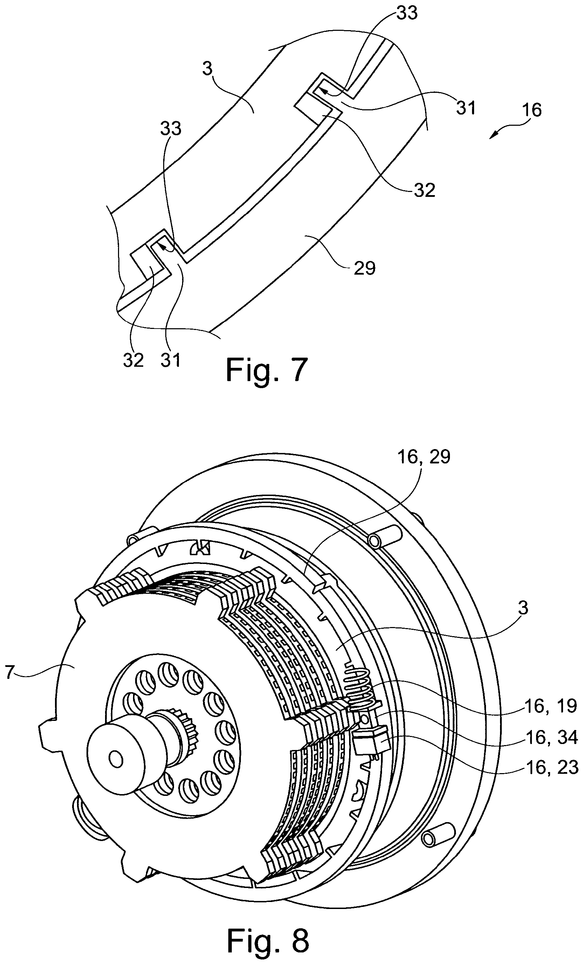

Die Fig. 7 zeigt die mit VII bezeichnet Detailansicht der Fig. 4. Die Stifte 31 des Rings 29 befinden sich in den Nuten 33 der Druckplatte 3. Durch Verdrehen des Rings 29 können die Stifte 31 auf die Stufen 32 verbracht werden und kann die Verriegelungsvorrichtung 16 geschlossen werden.

Die Fig. 8 zeigt in einer Perspektivansicht die Druckplatte 3 und Verriegelungsvorrichtung 16 der Fig. 4 mit dem Lamellenpaket 7. Der Ring 29 mit dem Mitnehmer 34, der Zugfeder 19 und dem Elektromagneten 23 ist um die Druckplatte 3 als erstem Bremskörper 4 angeordnet. Über die Druckplatte 3 kann das Lamellenpaket 7 beim Bremsen zusammen gedrückt werden.

## Patentansprüche

1. Bremsvorrichtung für ein Fahrzeug, insbesondere Flurförderzeug, die als Federspeicherbremse mit einem eine Vorspannkraft aufbringenden Kraftspeicher (6), insbesondere einer Feder (5), aufgebaut ist, wobei durch die Vorspannkraft eine Druckplatte (3) als ein erster Bremskörper (4) gegen mindestens einen drehbaren und abzubremsenden Bremsrotor (9) gedrückt wird und durch eine Lüftvorrichtung (11) die Druckplatte (3) von dem Bremsrotor (9) in eine gelüftete Stellung gedrückt werden kann,
**dadurch gekennzeichnet,**
**dass** die Druckplatte (3) in der gelüfteten Stellung durch eine Verriegelungsvorrichtung (16) unabhängig von der Lüftvorrichtung (11) gehalten werden kann.

2. Bremsvorrichtung nach Anspruch 1,
**dadurch gekennzeichnet,**
**dass** die Verriegelungsvorrichtung (16) mechanisch formschlüssig die Druckplatte (3) hält.

3. Bremsvorrichtung nach Anspruch 2,
**dadurch gekennzeichnet,**
**dass** die Verriegelungsvorrichtung (16) mindestens ein radial nach innen an einen Absatz (24) und/oder in eine Ausnehmung (21) der Druckplatte (3) greifendes Riegelelement (17) aufweist.

4. Bremsvorrichtung nach Anspruch 3,
**dadurch gekennzeichnet,**
**dass** die Verriegelungsvorrichtung (16) über den Umfang der Druckplatte (3) verteilt mehrere Riegelelemente (17) aufweist, bevorzugt drei Riegelelemente (17).

5. Bremsvorrichtung nach Anspruch 2,
**dadurch gekennzeichnet,**
**dass** die Verriegelungsvorrichtung (16) aus einem drehbaren Ring (29) besteht, der zusammen mit dem Bremskörper (4) eine Bajonettverriegelung (30) bildet, indem radial angeordnete Stifte (31) mit radial angeordneten Stufen (32) zusammenwirken.

6. Bremsvorrichtung nach einem der Ansprüche 2 bis 5,
**dadurch gekennzeichnet,**
**dass** die Verriegelungsvorrichtung (16) an axialen Verlängerungselementen der Druckplatte (3) auf einer zu dem Bremsrotor abgewandten Seite des Kraftspeichers (6) und der Lüftvorrichtung (11) wirkt.

7. Bremsvorrichtung nach einem der Ansprüche 2 bis 6,
**dadurch gekennzeichnet,**
**dass** die Verriegelungsvorrichtung (16) durch eine Feder (19,20) in Öffnungsrichtung oder Schließrichtung vorgespannt ist.

8. Bremsvorrichtung nach Anspruch 7,
**dadurch gekennzeichnet,**
**dass** die Verriegelungsvorrichtung (16) durch einen Elektromagneten (23) betätigt werden kann.

9. Bremsvorrichtung nach einem der Ansprüche 2 bis 8,
**dadurch gekennzeichnet,**
**dass** die Verriegelungsvorrichtung (16) durch eine von Hand betätigbare, mechanische Kraftübertragung (26) geschlossen und/oder geöffnet werden kann.

10. Bremsvorrichtung nach Anspruch 9,
**dadurch gekennzeichnet,**
**dass** die Kraftübertragung (26) ein Bowdenzug ist.

11. Bremsvorrichtung nach einem der Ansprüche 1 bis 10,
**dadurch gekennzeichnet,**
**dass** die Lüftvorrichtung (11) mindestens einen Hydraulikkolben aufweist.

12. Bremsvorrichtung nach einem der Ansprüche 1 bis 11,
**dadurch gekennzeichnet,**
**dass** die Lüftvorrichtung (11) mindestens einen Elektromagneten (12) aufweist.

13. Bremsvorrichtung nach einem der Ansprüche 1 bis 12,
**dadurch gekennzeichnet,**
**dass** die Verriegelungsvorrichtung (16) aus mindestens einem Permanentmagnet gebildet ist, dessen Feldstärke die Druckplatte (3) in der gelüfteten Position halten kann.

14. Bremsvorrichtung nach Anspruch 13,
**dadurch gekennzeichnet,**
**dass** durch eine mechanische Lösevorrichtung die Druckplatte (3) von dem Permanentmagneten weggedrückt werden kann.

15. Bremsvorrichtung nach Anspruch12 und einem der Ansprüche 13 oder 14,
**dadurch gekennzeichnet,**
**dass** durch ein Gegenfeld des Elektromagneten (12) die Druckplatte (3) von dem Permanentmagneten gelöst werden kann.

16. Bremsvorrichtung nach einem der Ansprüche 1 bis 15,
**dadurch gekennzeichnet,**
**dass** durch eine zusätzliche Betriebsbremse (2) eine zur Vorspannkraft entgegengesetzte Bremskraft aufgebracht werden kann.

17. Bremsvorrichtung nach Anspruch 16,
**dadurch gekennzeichnet,**
**dass** die Betriebsbremse (2) durch Seilzug oder hydraulisch betätigt werden kann.

18. Bremsvorrichtung nach einem der Ansprüche 1 bis 17,
**dadurch gekennzeichnet,**
**dass** eine Mehrzahl von Bremskörpern (8) wechselweise mit Bremsrotoren (9) ein Lamellenpaket (7) bilden, wobei der erste Bremskörper (4) als Druckplatte (3) das Lamellenpaket (7) zusammen drücken kann.

19. Verfahren zur Steuerung einer Bremsvorrichtung nach einem der vorhergehenden Ansprüche, bei dem zum Lösen der Feststellbremse die Lüftvorrichtung (11) betätigt, die Verriegelungsvorrichtung (16) geschlossen und während des Betriebs des Fahrzeuges, insbesondere Flurförderzeugs, die Lüftvorrichtung (11) abgeschaltet wird sowie zum Anziehen der Feststellbremse zunächst die Lüftvorrichtung (11) angeschaltet wird, die Verriegelungsvorrichtung (16) geöffnet und dann die Lüftvorrichtung (11) gelöst wird.

## Claims

1. Brake apparatus for a vehicle, in particular an industrial truck, which brake apparatus is constructed as a spring-loaded brake with a force accumulator (6) which applies a prestressing force, in particular a spring (5), a pressure plate (3) being pressed as a first brake body (4) by way of the prestressing force against at least one rotatable brake rotor (9) to be braked, and it being possible for the pressure plate (3) to be pressed from the brake rotor (9) into a released position by way of a releasing apparatus (11), **characterized in that** the pressure plate (3) can be held in the released position by way of a locking apparatus (16), independently of the releasing apparatus (11).

2. Brake apparatus according to Claim 1, **characterized in that** the locking apparatus (16) holds the pressure plate (3) in a mechanically positively locking manner.

3. Brake apparatus according to Claim 2, **characterized in that** the locking apparatus (16) has at least one bolt element (17) which engages radially on the inside onto a shoulder (24) and/or into a recess (21) of the pressure plate (3).

4. Brake apparatus according to Claim 3, **characterized in that** the locking apparatus (16) has a plurality of bolt elements (17), preferably three bolt elements (17), in a manner which is distributed over the circumference of the pressure plate (3).

5. Brake apparatus according to Claim 2, **characterized in that** the locking apparatus (16) consists of a rotatable ring (29) which forms a bayonet locking means (30) together with the brake body (4), by radially arranged pins (31) interacting with the radially arranged steps (32).

6. Brake apparatus according to one of Claims 2 to 5, **characterized in that** the locking apparatus (16) acts on axial extension elements of the pressure plate (3) on a side of the force accumulator (6) and of the releasing apparatus (11), which side faces away from the brake rotor.

7. Brake apparatus according to one of Claims 2 to 6, **characterized in that** the locking apparatus (16) is prestressed in the opening direction or closing direction by way of a spring (19, 20).

8. Brake apparatus according to Claim 7, **characterized in that** the locking apparatus (16) can be actuated by way of an electromagnet (23).

9. Brake apparatus according to one of Claims 2 to 8, **characterized in that** the locking apparatus (16) can be closed and/or opened by way of a mechanical force transmission means (26) which can be actuated by hand.

10. Brake apparatus according to Claim 9, **characterized in that** the force transmission means (26) is a Bowden cable.

11. Brake apparatus according to one of Claims 1 to 10, **characterized in that** the releasing apparatus (11) has at least one hydraulic piston.

12. Brake apparatus according to one of Claims 1 to 11, **characterized in that** the releasing apparatus (11) has at least one electromagnet (12).

13. Brake apparatus according to one of Claims 1 to 12, **characterized in that** the locking apparatus (16) is formed from at least one permanent magnet, the field strength of which can hold the pressure plate (3) in the released position.

14. Brake apparatus according to Claim 13, **characterized in that** the pressure plate (3) can be pressed away from the permanent magnet by way of a mechanical disengaging apparatus.

15. Brake apparatus according to Claim 12 and either of Claims 13 and 14, **characterized in that** the pressure plate (3) can be disengaged from the permanent magnet by way of an opposing field of the electromagnet (12).

16. Brake apparatus according to one of Claims 1 to 15, **characterized in that** a brake force which is opposed to the prestressing force can be applied by way of an additional service brake (2).

17. Brake apparatus according to Claim 16, **characterized in that** the service brake (2) can be actuated hydraulically or by way of a control cable.

18. Brake apparatus according to one of Claims 1 to 17, **characterized in that**, in an alternating manner with brake rotors (9), a plurality of brake bodies (8) form a multiple disc assembly (7), it being possible for the first brake body (4), as a pressure plate (3), to press together the multiple disc assembly (7).

19. Method for controlling a brake apparatus according to one of the preceding claims, in which method, in order to disengage the parking brake, the releasing apparatus (11) is actuated, the locking apparatus (16) is closed and, during the operation of the vehicle, in particular the industrial truck, the releasing apparatus (11) is switched off, and, in order to apply the parking brake, first of all the releasing apparatus (11) is switched on, the locking apparatus (16) is opened, and the releasing apparatus (11) is then disengaged.

## Revendications

1. Dispositif de freinage pour un véhicule, en particulier un chariot de manutention, qui est construit sous forme de frein accumulateur à ressort avec un accumulateur de force (6) appliquant une force de précontrainte, en particulier un ressort (5), dans lequel une plaque de pression (3), sous l'effet de la force de précontrainte, est pressée en tant que premier corps de freinage (4) contre au moins un rotor de frein (9) pouvant tourner et devant être freiné, et dans lequel la plaque de pression (3), sous l'effet d'un dispositif de ventilation (11), peut être pressée depuis le rotor de frein (9) dans une position ventilée,
**caractérisé en ce que**
la plaque de pression (3) peut être maintenue indépendamment du dispositif de ventilation (11) dans la position ventilée par un dispositif de verrouillage (16).

2. Dispositif de freinage selon la revendication 1,
**caractérisé en ce que**
le dispositif de verrouillage (16) retient mécaniquement la plaque de pression (3) par engagement par correspondance de formes.

3. Dispositif de freinage selon la revendication 2,
**caractérisé en ce que**
le dispositif de verrouillage (16) présente au moins un élément de verrou (17) s'engageant radialement vers l'intérieur avec un retrait (24) et/ou dans un évidement (21) de la plaque de pression (3).

4. Dispositif de freinage selon la revendication 3,
**caractérisé en ce que**
le dispositif de verrouillage (16) présente plusieurs éléments de verrou (17) répartis sur la périphérie de la plaque de pression (3), de préférence trois éléments de verrou (17).

5. Dispositif de freinage selon la revendication 2,
**caractérisé en ce que**
le dispositif de verrouillage (16) se compose d'une bague rotative (29) qui forme, conjointement avec le corps de freinage (4), un verrouillage à baïonnette (30), par le fait que des goupilles disposées radialement (31) coopèrent avec des creux (32) disposés radialement.

6. Dispositif de freinage selon l'une quelconque des revendications 2 à 5,
**caractérisé en ce que**
le dispositif de verrouillage (16) agit au niveau d'éléments de prolongements axiaux de la plaque de pression (3) sur un côté de l'accumulateur de force (6) opposé au rotor de freinage et au dispositif de ventilation (11).

7. Dispositif de freinage selon l'une quelconque des revendications 2 à 6,
**caractérisé en ce que**
le dispositif de verrouillage (16) est précontraint par un ressort (19, 20) dans la direction d'ouverture ou dans la direction de fermeture.

8. Dispositif de freinage selon la revendication 7,
**caractérisé en ce que**
le dispositif de verrouillage (16) peut être actionné par un électroaimant (23).

9. Dispositif de freinage selon l'une quelconque des revendications 2 à 8,
**caractérisé en ce que**
le dispositif de verrouillage (16) peut être fermé et/ou ouvert par une transmission de force mécanique (26) pouvant être actionnée à la main.

10. Dispositif de freinage selon la revendication 9, **caractérisé en ce que**
la transmission de force (26) est un câble Bowden.

11. Dispositif de freinage selon l'une quelconque des revendications 1 à 10,
**caractérisé en ce que**
le dispositif de ventilation (11) présente au moins un piston hydraulique.

12. Dispositif de freinage selon l'une quelconque des revendications 1 à 11,
**caractérisé en ce que**
le dispositif de ventilation (11) présente au moins un électroaimant (12).

13. Dispositif de freinage selon l'une quelconque des revendications 1 à 12,
**caractérisé en ce que**
le dispositif de verrouillage (16) est formé à partir d'au moins un aimant permanent, dont l'intensité de champ peut retenir la plaque de pression (3) dans la position ventilée.

14. Dispositif de freinage selon la revendication 13,
**caractérisé en ce que**
la plaque de pression (3) peut être repoussée de l'aimant permanent par un dispositif de libération mécanique.

15. Dispositif de freinage selon la revendication 12 et selon l'une quelconque des revendications 13 ou 14,
**caractérisé en ce que**
la plaque de pression (3) peut être détachée de l'aimant permanent par un champ opposé de l'électroaimant (12).

16. Dispositif de freinage selon l'une quelconque des revendications 1 à 15,
**caractérisé en ce**
**qu'**une force de freinage opposée à la force de précontrainte peut être appliquée par un frein de service supplémentaire (2).

17. Dispositif de freinage selon la revendication 16,
**caractérisé en ce que**
le frein de service (2) peut être commandé par un câble Bowden ou hydrauliquement.

18. Dispositif de freinage selon l'une quelconque des revendications 1 à 17,
**caractérisé en ce**
**qu'**une pluralité de corps de freinage (8) forment, en alternance avec des rotors de frein (9), un paquet de disques (7), le premier corps de freinage (4), en tant que plaque de pression (3), pouvant comprimer le paquet de disques (7).

19. Procédé de commande d'un dispositif de freinage selon l'une quelconque des revendications précédentes, dans lequel, pour relâcher le frein de stationnement, le dispositif de ventilation (11) est actionné, le dispositif de verrouillage (16) est fermé, et, pendant le fonctionnement du véhicule, en particulier du chariot de manutention, le dispositif de ventilation (11) est coupé et, pour serrer le frein de stationnement, le dispositif de ventilation (11) est tout d'abord activé, le dispositif de verrouillage (16) est ouvert et le dispositif de ventilation (11) est relâché.
